# EUROPEAN PATENT APPLICATION

(11) **EP 3 206 082 A1**
(43) Date of publication of application: **16.08.2017**
(21) Application number: 16159978.2
(22) Date of filing: 11.03.2016
(51) Int. Cl.: G03B 17/56, G03B 37/04, G06T 7/00, G06T 11/00, H04N 5/232, H04N 5/247, G06F 3/0481

(54) **SYSTEM, METHOD AND COMPUTER PROGRAM FOR RECORDING A NON-VIRTUAL ENVIRONMENT FOR OBTAINING A VIRTUAL REPRESENTATION**

(30) Priority: 12.02.2016 NL 2016256
(71) Applicant: VROXTECHNOLOGY B.V., 3134 Vlaardingen (NL)
(72) Inventor: Berkhout, Harald Erik, 1023 NN Amsterdam (NL); Norani, Hamid, 3132 CA Vlaardingen (NL)
(74) Representative: 't Jong, Bastiaan Jacob

(57) **Abstract**

A method is disclosed for recording a non-virtual environment for obtaining a virtual representation of the non-virtual environment using a moveable device comprising a plurality of cameras. The method comprises a number of steps in the non-virtual environment. One of the steps comprises taking a first plurality of photographs of the non-virtual environment using the plurality of cameras at a first location. Another step comprises moving the moveable device from the first location to a second location over a surface and continuously taking a plurality of video-recordings with the plurality of cameras of the non-virtual environment while moving the device from the first location to the second location. Yet another step comprises taking a second plurality of photographs of the non-virtual environment using the plurality of cameras at the second location. Further, a system is disclosed for recording a non-virtual environment for obtaining a virtual representation of the non-virtual environment.

## Description

### FIELD OF THE INVENTION

The invention relates to a method for recording a non-virtual environment for obtaining a virtual representation of the non-virtual environment comprising taking a first and a second plurality of photographs and taking a plurality of video-recordings. The invention also relates to a moveable system and to a computer program for recording a non-virtual environment.

### BACKGROUND OF THE INVENTION

Virtual representations, e.g. virtual environments, are suitably used in various fields to simulate a physical presence in the real world, i.e. a non-virtual environment. As such, virtual representations may enable a person to explore a place that exists in the real world, e.g. a city, without him having to actually visit the place in real life. In an example, a store owner may create a virtual representation of his store and place this virtual representation on the company's website. Visitors of the website will then have the possibility to explore the virtual representation and get a feel for the set-up of the store, e.g. find out which articles are sold and where specific articles can be found in the store. A virtual representation thus may be a convenient tool for a store owner to engage public and advertise his merchandise.

WO 2015/085406 discloses a system and method for capturing panoramic and stereoscopic image data that can be utilized to produce panoramic and stereoscopic videos for use in conjunction with suitable virtual reality display devices. The system utilizes a camera arrangement consisting of a plurality of camera pairs positioned to capture a 360° environment. Each camera pair comprises a left-eye camera and a right-eye camera and the camera pair planes of each camera pair are substantially parallel to each other. The camera pairs can be arranged in levels of varying heights in order to accommodate a greater number of camera pairs, thereby enhancing the resulting image data. Once the image data has been captured, left and right-eye panoramic videos are generated by merging the corresponding images from each left-eye camera at each time point, and each right-eye camera at each time point. The resulting videos can then be output for panoramic and stereoscopic viewing.

### SUMMARY

It is an object of the present disclosure to provide an improved system and method for recording a non-virtual environment for obtaining a virtual representation of a non-virtual environment.

To that end a method is disclosed for recording a non-virtual environment for obtaining a virtual representation of the non-virtual environment using a moveable device comprising a plurality of cameras. The method comprises a number of steps in the non-virtual environment. One of the steps comprises taking a first plurality of photographs of the non-virtual environment using the plurality of cameras at a first location. Another step comprises moving the moveable device from the first location to a second location over a surface, possibly using a remote control for moving the device, and continuously taking a plurality of video-recordings with the plurality of cameras of the non-virtual environment while moving the device from the first location to the second location. Yet another step comprises taking a second plurality of photographs of the non-virtual environment using the plurality of cameras at the second location.

Also a moveable system is disclosed for recording a non-virtual environment for obtaining a virtual representation of the non-virtual environment. The system comprises a structure (e.g. a frame) that is configured to hold a plurality of cameras. The cameras are preferably mounted in a stationary manner to the structure. Furthermore, the system comprises the plurality of cameras attached to the structure, such that at least two cameras out of the plurality of cameras have overlapping fields of view. Each camera of the plurality of cameras is configured to take photographs of the non-virtual environment and to take video-recordings of the non-virtual environment.

The applicants have realized that improved virtual representations, i.e. virtual environments, can be obtained when the non-virtual environment (the 'real world') is both photographed and video-recorded. In the prior art, typically a virtual environment comprises either a composite photograph or a composite movie. A composite photograph, also called a "panoramic" photograph, may be created by taking several photographs of a surrounding and stitching these photographs together. A composite movie may be created by simultaneously video-recording a non-virtual environment with a plurality of video cameras and video stitching these recordings together.

A composite photograph/video may be presented in its entirety to a user. However, usually only a small part is presented, for example only 140 degrees of a 360 degrees panoramic photograph. A user may then control which part is presented to him by interacting with a system, such as a virtual reality headset or a display using navigation means, such as a mouse, so that he can discover other parts of the composite photograph/video.

A composite movie is dynamic, which means that if a user at some moment during the video looks at one (spatial) part of the video he cannot not see an event that happens at that same moment in another (spatial) part of the video. Therefore, if a virtual environment only comprises a composite movie, inevitably some information in the virtual environment will be lost, i.e. will not be conveyed to a user.

A (composite) photograph is static, which means that a user can take all the time he wants to explore the photograph, i.e. explore the virtual environment. However, apart from a static virtual environment being less engaging for an audience than a dynamic environment, a static environment has further disadvantages. Typically a static virtual environment is created by photographing a non-virtual environment at different locations and creating a composite photograph for each location. Each location in the non-virtual environment then corresponds to a so-called waypoint in the virtual environment. A user that is exploring the virtual environment is presented another composite photograph at each waypoint. When moving in the virtual environment from one waypoint to another waypoint a user may experience a sudden transition from one composite photograph to another, which may cause the user to lose his orientation in the virtual environment.

By applying the above-described method an improved virtual representation of a non-virtual environment may be obtained. The method specifies that at two locations in the non-virtual environment a plurality of photographs are taken using a moveable device. As explained, these pluralities of photographs may be used to create two composite photographs and create two waypoints in a virtual environment: a first waypoint corresponding to the first location and a second waypoint corresponding to the second location.

The method further specifies that while moving the device from the first location to the second location, the non-virtual environment is continuously video-recorded with the plurality of cameras. As explained, a plurality of video-recordings may be used to create a composite movie. In this case the composite movie thus shows the video-recorded non-virtual environment from a viewpoint that moves from the first location to the second location. In the virtual environment the composite movie thus may simulate the viewpoint of a person moving from the first waypoint to the second waypoint. It should be appreciated that "viewpoint" here refers to the location from which the virtual environment is perceived and not to the actual view that is presented to a user. During the movement a user may be able to control the presented view, i.e. the user may be able to look around in the virtual environment while moving in the virtual environment from the first to the second waypoint.

Thus advantageously the user is able to explore the virtual environment at the first and second waypoint for as long as he wants, so that potentially no information is lost here. Another advantage of incorporating these waypoints in the virtual environment is the following. A virtual environment preferably comprises objects with which a user can interact in order to improve the user experience. In an example, the virtual environment represents a moped store. A user may be able to click on a virtual representation of a moped in the virtual environment and as a result may be presented with a sound of the moped starting its engine. Another example of such user interaction is that a user may activate a hyperlink by clicking on an object in the virtual environment. The object may for example be linked to a website where a user can purchase the object. It is easily understood that such interactions with objects are more easily integrated in composite photographs than in composite movies.

Furthermore, conveniently the composite movie is presented in the virtual environment when a user indicates that he wants to move from the first waypoint to the second waypoint. Since the movie begins with the viewpoint being at the first waypoint and ends with the viewpoint being at the second waypoint, a smooth transition from the first to the second waypoint is provided by using the same cameras for making the photographs and the videos, wherein the user may be able to keep looking around and hence maintain his orientation in the virtual environment. Also, these composite movies add to the dynamic character of the virtual environment.

The plurality of cameras may comprise at least two, at least three, at least four, at least five, at least 10, at least 15, at least 20 or at least 22 cameras.

Taking a plurality of photographs using the plurality of cameras may comprise taking with each camera out of the plurality of cameras a photograph. Further, when taking a plurality of photographs using the plurality of cameras, the cameras may simultaneously each take a photograph yielding the plurality of photographs.

It should be appreciated that "while moving the device from the first location to the second location" may imply that the video-recordings are initiated when the device is at the first location and are ceased when the device is at the second location. The video-recordings may be taken uninterruptedly. It should be appreciated that the video-recordings may be taken with the plurality of cameras substantially throughout the duration of moving the device from the first location to the second location.

Moving the device over the surface may comprise translating the device with respect to the surface.

Since each camera of the plurality of cameras of the disclosed moveable system is configured to take photographs and to take video-recordings, the system may be beneficially used in the method. The system enables smooth integration of a composite movie with a composite photograph, since it enables that the plurality of video-recordings may be taken at the exact same location at which the plurality of photographs is taken. The system can simply stand still at one location, take a plurality of photographs, and start the plurality of video-recordings at this location. When separate devices are used for photographing and video-recording, these devices have to be meticulously interchanged.

It should be appreciated that the moveable system may comprise a carrier, e.g. a carrier on wheels, that is configured to carry the structure. The moveable system may also comprise control means that are configured to maneuver the moveable system. The control means may be remotely controllable.

The structure may define a sphere or be sphere-like. Furthermore, each camera of the plurality of cameras may be arranged such that it is substantially aimed at a direction outwards from the midpoint of the sphere and substantially coinciding with a line through the midpoint of the sphere and the position of the camera, i.e. in a substantially radial direction.

A field of view of a camera may comprise an extent of the non-virtual environment that is captured, or imaged, by the camera, or by an image sensor of the camera. When two fields of view of two respective cameras overlap, the two respective cameras may both capture a same part of the non-virtual environment. The combined fields of view of the plurality of cameras may substantially cover 180 degrees, or 360 degrees, in the non-virtual environment. The combined fields of view may cover 360 by 180 degrees of the non-virtual environment. The fields of view of the plurality of cameras may also substantially cover an entire sphere around the moveable system, and may thus cover 360 by 360 degrees of the non-virtual environment. Herewith, all directions from the structure may be covered by at least one field of view. Overlapping fields of view may be beneficial because it may ease stitching of photographs and/or video stitching of video recordings. It should be appreciated that the system may photograph and/or video-record part of itself, which may be undesirable. Methods are known in the art for removing such self images from composite movies and composite photographs.

It should be appreciated that in the context of the present disclosure a video recording may comprise a sequence of still images that when presented on a display may constitute a moving image. Such still images may differ from photographs in the present disclosure in the sense that a photograph may not be part of such sequence.

In one embodiment the method further comprises taking the first and second plurality of photographs at a first resolution and taking the plurality of video-recordings at a second resolution, the first resolution being higher than the second resolution. In one embodiment of the system each camera of the plurality of cameras is configured to take photographs at a first resolution and to take video-recordings at a second resolution, the first resolution being higher than the second resolution. These embodiments enable an improved user experience and efficient use of resources. The applicant has recognized that the composite photographs that are presented to a user are preferably of higher resolution than the composite movies, or in other words, has recognized that the composite movies need not be of a resolution that is as high as the resolution of the composite photographs. At a waypoint in a virtual environment a user may spend as much time as he needs to discover the virtual representation in great detail. Therefore preferably high resolution composite photographs are used to improve the user experience. On the other hand, a user will not be able to explore the virtual environment in such detail during a composite movie, because the images are moving and because there is a limited time available. Therefore, a lower resolution may be used for composite movies, hereby reducing the amount of required resources for the method and/or in the system, such as storage means.

However, it should be appreciated that the first and second resolution are preferably not too far apart, so that the composite photographs may be conveniently integrated with the composite movie. If the resolution of a composite movie is far lower than the resolution of a composite photograph integration of the two may become troublesome. In a preferred embodiment the cameras are configured to take photographs at a 4K resolution, e.g. 7952 x 5304 pixels, and to take video-recordings at a 4K resolution, e.g. 3840 x 2160 pixels.

In one embodiment the method comprises stitching the first plurality of photographs together forming a first composite photograph of the non-virtual environment. The method further comprises video stitching the plurality of video-recordings together forming a composite movie of the non-virtual environment. In this embodiment, the method further comprises stitching the second plurality of photographs together forming a second composite photograph of the non-virtual environment. The embodiment further comprises linking the first composite photograph to the composite movie and linking the second composite photograph to the composite movie for obtaining the virtual representation. This embodiment enables obtaining the improved virtual representation. Based on the link between the first composite photograph and the composite movie and based on the link between the second composite photograph and the composite movie, subsequently the first composite photograph, the composite movie, and the second composite photograph may be presented to a user, e.g. when the user indicates in the virtual environment that he wishes to proceed from a first waypoint to a second waypoint. This embodiment is particularly advantageous for a virtual environment that comprises more than two waypoints. In an example three composite photographs are stored and two composite movies. A first composite photograph that is to be presented if the user finds himself at a first waypoint in the virtual environment. A second composite photograph that is to be presented if the user finds himself at a second waypoint in the virtual environment. A third composite photograph that is to be presented if the user finds himself at a third waypoint in the virtual environment. In this example, a user finds himself in the virtual environment at a first waypoint and can choose to proceed to either the second waypoint or to the third waypoint. As said, two composite movies are stored, a first composite movie, that should be presented to a user if he wishes to proceed to the second waypoint, and a second composite movie, that should be presented if the user wishes to proceed to the third waypoint in the virtual environment. In this example, the user indicates that he wants to proceed to the second waypoint (where the second composite photograph is to be presented). Now, because the first composite movie is the only composite movie that is linked to both the first composite photograph and to the second composite photograph, this first composite movie is correctly presented to a user.

It should be appreciated that the first plurality of photographs may comprise at least two photographs that each depict a similar part of the non-virtual environment. Likewise, the second plurality of photographs may comprise at least two photographs that each depict a similar part of the non-virtual environment. Stitching a plurality of photographs together may comprise using computer software to form a composite photograph on the basis of the plurality of photographs in a manner known as such to the skilled person. Further, video stitching a plurality of video recordings may also comprise using software to form a composite movie on the basis of the plurality of video recordings in a manner known as such to the skilled person.

In one embodiment, the composite movie comprises a first still image and a second still image and the method further comprises -linking the first composite photograph to the first still image and linking the second composite photograph to the second still image.

The first still image may comprise the still image that is presented at the start of the composite movie and the second still image may comprise the still image that is presented at the end of the composite movie.

Linking the first composite photograph to the first still image may comprise identifying two parts, a first part in the first composite photograph and a second part in the first still image that are substantially identical, e.g. depict substantially the same image. Linking the second composite photograph to the second still image may comprise identifying two parts, a first part in the second composite photograph and a second part in the second still image that are substantially identical, e.g. depict substantially the same image.

In an example, one or more parts, e.g. every part of a composite photograph, are linked to a corresponding part of a still image. In another example, only one part of a composite photograph and one corresponding part of a still image are linked.

This embodiment allows for seamless integration of the first and second composite photograph with the composite movie and thus enables a smooth user experience.

In one embodiment each camera of the plurality of cameras of the system comprises a full frame image sensor. It should be appreciated that a full frame image sensor may comprise an image sensor of 35 mm format, which may be understood as a name for a 36x24 mm, or 35.9 x 24.0 mm, film format or image sensor format.

The applicant has realized that the use of full frame image sensors yield many advantages. Less cameras may be required to capture a certain part, e.g. 360 degrees around, of the non-virtual environment. A camera with a full frame sensor has a broader field of view than the same camera without a full frame sensor. In an example, 22 cameras are sufficient to capture the entire surroundings, 360 degrees by 360 degrees, of the system. Reducing the amount of cameras in the system is advantageous, because it results in a lighter system that is easily maneuverable, requiring smaller power sources and with reduced complexity.

It should be appreciated that the full frame sensors may also improve stitching and video-stitching results, since it may obviate the use of wide angle lenses. Wide angle lenses may give rise to distortions in captured images, such as barrel distortion wherein straight lines appear curved near the edges of a frame. These distortions may lead to increased computational complexity in stitching processes and may lead to noticeable distortions in composite photographs and/or composite movies.

In one embodiment the structure comprises an illumination system (e.g. one or more lamps) that is configured to illuminate the non-virtual environment. This embodiment advantageously enables that the non-virtual environment is uniformly illuminated, which may yield better composite photographs and videos. Preferably, the illumination system is positioned within the structure in order to evenly illuminate the non-virtual environment in all directions. The illumination system may comprise at least one lamp, at least two lamps, at least three lamps, at least four lamps, at least five lamps, at least ten lamps, at least 15 lamps, at least 20 lamps or at least 22 lamps, or at least as many lamps as there are cameras, or more lamps than there are cameras. The illumination system may be configured to be powered by solar energy. The applicant has realized that applying more lamps enables a more uniform illumination of the non-virtual environment. If for example the system comprises only one lamp that is mounted on one side of the system, the lamp may illuminate the non-virtual environment at this side. However, at an opposite side of the system this one lamp may cause undesirable shadows because the light of this lamp may be blocked by the system itself and may thus not reach the opposite side of the system.

In one embodiment the system comprises control means that are configured to control the illumination system to adjust at least one of a hue and a light intensity of light radiated by the illumination system. It should be appreciated that the hue may be adjusted by adjusting a color temperature of the light radiated by the illumination system. The adjustments of the hue and the light intensity may be substantially continuous. This embodiment is advantageous, because the system may be suitably adaptable to different lighting conditions in the non-virtual environment.

In one embodiment the system further comprises at least one light detector for measuring at least one of a hue and a light intensity of ambient light in the non-virtual environment, wherein the control means are configured to control the illumination system on the basis of the measured hue and/or light intensity of the ambient light. This embodiment advantageously enables that the system automatically adapts the hue and/or light intensity of the radiated light based on the prevalent ambient light.

In one embodiment the illumination system comprises a first lamp and a second lamp and the control means are configured to separately control the first and second lamp. The applicant has realized that in some situations it may be beneficial to be able to separately control lamps in order to achieve uniform lighting conditions around the system. It may for example be that on one side of the system the ambient light is very weak, e.g. because a dark corner is on this side of the system, whereas on a second side of the system the ambient light has a very high light intensity, e.g. because a window is on this second side. In such a situation a lamp that radiates light in the direction of the dark corner may be controlled to radiate light of a higher light intensity, whereas a lamp that radiates light in the direction of the window may be controlled to radiate light of a lower light intensity. Similarly, the hues of light radiated by two lamps may also be adapted separately.

In one embodiment the control means are further configured to control at least one of a height and orientation of the structure. The system may comprise a pole that supports the structure. The pole may be adjustable in height. To this end, the pole may comprise electromechanical and/or hydraulic means. This embodiment is advantageous because it allows a virtual environment to be experienced from a same height despite height differences in the surface or from different heights. The latter may for example be advantageous in a training situation, wherein a viewpoint of a child may be experienced. Being able to adjust the orientation of the structure may be beneficial, because the orientation of the structure may be kept constant with respect to a horizontal plane, even if the system moves over a surface that has a varying slope.

In one embodiment the system comprises a gimbal that couples the pole to the structure. This may be beneficial for controlling the orientation of the structure, e.g. for keeping the orientation of the structure constant with respect to a horizontal plane.

In another embodiment, the system comprises a gimbal that couples the pole to the carrier. Applying the gimbal between the pole and the carrier may prevent the system from tipping over when the system moves on a sloped surface, because then the gimbal may keep the pole in a vertical orientation irrespective of the slope of the surface.

In one embodiment the control means comprise stabilizing means that automatically keep the structure fixed with respect to a horizontal plane. The control means may be configured to maintain the orientation of the structure fixed with respect to a horizontal plane.

In one embodiment the control means are remotely controllable. This embodiment is especially advantageous when the non-virtual environment is photographed and video-recorded in all directions, since then any cable or wire extending from the system or any person controlling the system and standing in the field of view of any of the cameras would appear on one of the composite photographs and/or composite movie, and would thus appear in the virtual representation of the non-virtual environment.

One distinct aspect of the disclosure relates to a moveable system for recording a non-virtual environment for obtaining a virtual representation of the non-virtual environment. The system comprises a structure that is configured to hold a plurality of cameras, such that at least two cameras out of the plurality of cameras have overlapping fields of view. The structure comprises an illumination system that is configured to illuminate the non-virtual environment. The illumination system is optionally configured as described above, and may thus comprise a first lamp and a second lamp. Furthermore, the system may comprise control means as described herein, which may thus be configured to separately control a first lamp and a second lamp to adjust at least one of a hue and a light intensity of light radiated by each lamp, and/or at least one light detector as described herein.

One other distinct aspect of the disclosure relates to a moveable system for recording a non-virtual environment for obtaining a virtual representation of the non-virtual environment comprising a structure that is configured to hold a plurality of cameras, a carrier that is configured to carry the structure and to move the structure over a surface and a pole attached to the carrier and to the structure that is configured to support the structure, wherein the system further comprises a gimbal that couples the carrier to the pole.

The disclosure further relates to the subject-matter of the following clauses.
1. A camera system for taking recordings, e.g. virtual reality recordings, comprising a frame defining a space, a plurality of cameras applied to the frame, wherein each camera of the plurality of cameras has a different orientation directed outwards from the space and wherein at least two fields of view of at least two respective cameras overlap, wherein the plurality of cameras comprises at least one full-frame camera. In one embodiment the camera system is a moveable system for recording a non-virtual environment for obtaining a virtual representation of the non-virtual environment.
2. The camera system according to clause 1, wherein the at least two respective cameras are full-frame cameras.
3. The camera system according to clause 1 or 2, wherein the fields of view of the cameras cover the substantially entire surrounding of the camera system.
4. The camera system according to one or more of the preceding clauses, wherein the frame defines a spherical space.
5. The camera system according to one or more of the preceding clauses, wherein at least one lamp is applied in the space defined by the frame.
6. The camera system according to clause 5, wherein the lamp is configured to radiate light of different color temperatures, and wherein the frame further optionally comprises at least one light detector for measuring the light temperature of ambient light and control means for adjusting the light temperature of the lamp on the basis of the measured light temperature of the ambient light.
7. The camera system according to one or more of the preceding clauses, further comprising a mobile undercarriage.
8. The camera system according to one or more of the preceding clauses, wherein an orientation of the frame is adjustable.
9. The camera system according to one or more of the preceding clauses, wherein at least one of the undercarriage, the lamp and the orientation of the frame is remotely controllable.
10. A method for creating a virtual environment on the basis of a non-virtual environment from a moveable device on which a plurality of cameras is mounted, the method comprising photographing from a first location the substantially entire non-virtual environment around with the plurality of cameras, moving the moveable device from the first location to a second location over a surface, wherein while moving the moveable device the video-recordings are taken of the non-virtual environment with the plurality of cameras, and photographing from the second location the substantially entire non-virtual environment around with the plurality of cameras. In one embodiment the method according to this clause is a method for recording a non-virtual environment for obtaining a virtual representation of the non-virtual environment using a moveable device comprising a plurality of cameras.
11. The method according to clause 10, further comprising stitching the recorded images in order to create a virtual reality.
12. The method according to clause 10 or 11, wherein the camera system according to one or more of clauses 1-9 is applied.

One aspect of the disclosure relates to a computer program or suite of computer programs comprising at least one software code portion or a computer program product storing at least one software code portion, the software code portion, when run on a computer system, being configured for executing one or more steps of the methods described above.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In one aspect, embodiments of the present invention may relate to a computer-implemented method for recording a non-virtual environment for obtaining a virtual representation of the non-virtual environment using a moveable device comprising a plurality of cameras.

Moreover, a computer program for carrying out the methods described herein, as well as a non-transitory computer readable storage-medium storing the computer program are provided. A computer program may, for example, be downloaded (updated) to the moveable device or be stored upon manufacturing of the moveable device.

Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIGS. 1-3 are flow charts illustrating steps of the method for recording a non-virtual environment;
FIG. 4 is a schematic illustration of the moveable system for recording a non-virtual environment;
FIG. 5 is a schematic illustration of a structure that is configured to hold a plurality of cameras;
FIG. 6 is a front view of a structure;
FIG. 7 is a top view of a structure;
FIG. 8 is a side view of a structure;
FIG. 9 is a bottom view of a structure;
FIG. 10 illustrates the concept of field of view and overlapping fields of view;
FIG. 11 is a schematic illustration of the fields of view of cameras in an embodiment;
FIG. 12 is a schematic illustration of a structure comprising an illumination system;
FIG. 13 is a floor plan of a non-virtual environment;
FIGS. 14-17 schematically show a possible virtual representation that is obtained according to the method and/or using the system;
FIG 18 depicts a data processing system that may be used in the system and/or method.

### DETAILED DESCRIPTION OF THE DRAWINGS

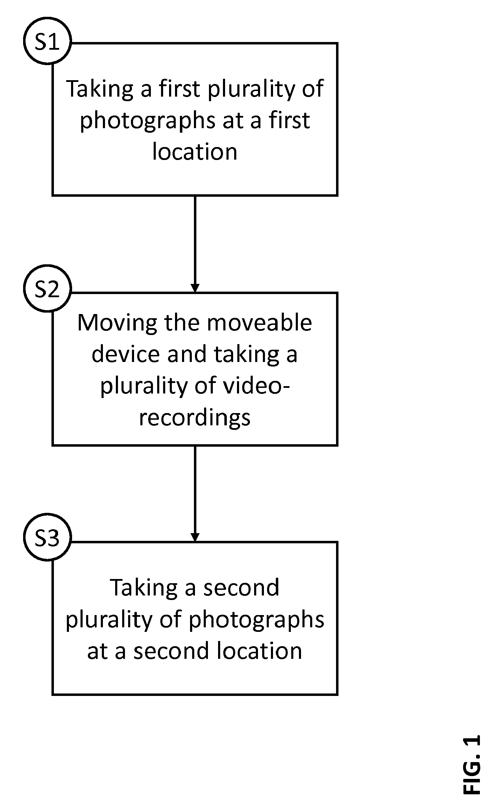

FIG. 1 schematically shows an embodiment of a method for recording a non-virtual environment to obtain a virtual representation of the non-virtual environment. Step S1 comprises taking a first plurality of photographs of the non-virtual environment using the plurality of cameras at a first location. Step S2 comprises moving the moveable device from the first location to a second location over a surface and continuously taking a plurality of video-recordings with the plurality of cameras of the non-virtual environment while moving the device from the first location to the second location. Step S3 comprises taking a second plurality of photographs of the non-virtual environment using the plurality of cameras at the second location.

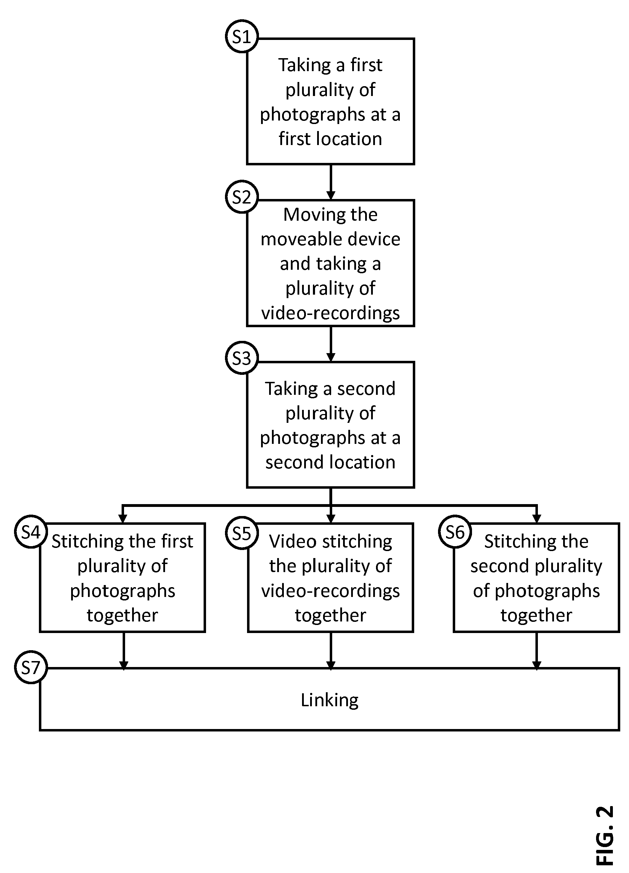

FIG. 2 shows an embodiment of the method with additional steps S4, S5, S6, S7. As shown, steps S4, S5 and S6 may be performed in parallel. Steps S4 and S6 represent stitching the first respectively the second plurality of photographs together forming the first respectively second composite photograph. Stitching a plurality of photographs together is well known to the skilled person and may be performed by using one of the many photo stitching software products that are available on the market.

Step S5 represents video stitching the plurality of video recordings. Video-stitching is well known to the skilled person and again one of the video stitching software products available on the market may be used for this step.

Step S7 represents linking the first composite photograph to the composite movie and linking the second composite photograph to the composite movie for obtaining the virtual representation.

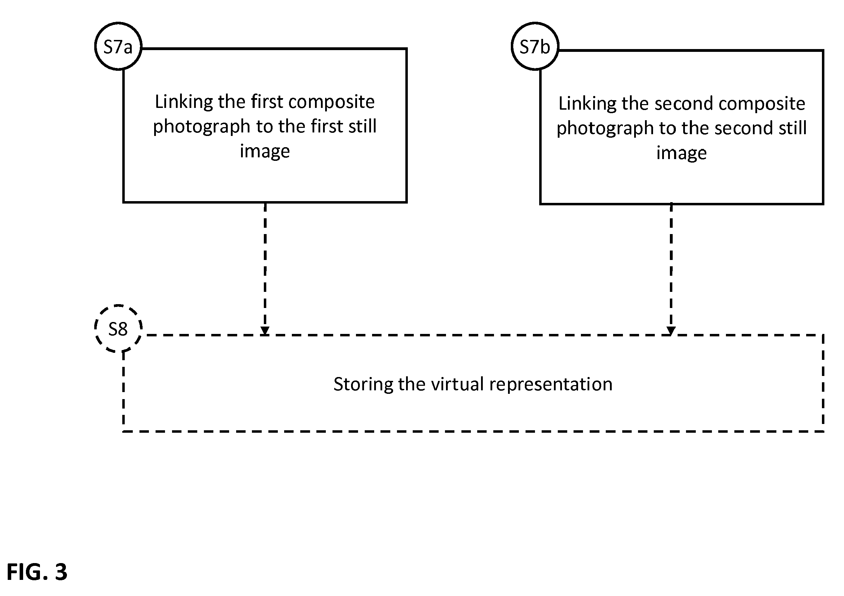

FIG. 3 schematically shows yet another embodiment of the method. Step S7 described above, may comprise step S7a, linking the first composite photograph and the first still image, and step S7b, linking the second composite photograph and the second still image. Herein linking may comprise identifying a part of the composite photograph and a part of the still image, that are substantially identical to each other.

In an example every part of the first composite photograph is linked to a corresponding part of the first still image. As a result, the part of the composite photograph that is presented to a user finding himself at a first waypoint in the virtual environment, is linked to a corresponding part of the first still image, and thus to a corresponding (spatial) part of the composite movie. Hence, when a user indicates that he wants to move to a second waypoint in the virtual environment, the corresponding (spatial) part of the first still image (and thus of the composite movie) can be presented to him. As a result, the orientation of the user in the virtual representation does not suddenly change in the transition from first composite photograph to composite movie. It is easily understood that a smooth transition from composite video to composite photograph when arriving at the second waypoint can be achieved by linking every part of the second still image to a corresponding part of the second composite photograph.

In another example, only one part of the first composite photograph is linked to one corresponding part of the first still image, and thus to one corresponding (spatial) part of the composite movie. In this case, the method optionally comprises the step of replacing the one part of the first composite photograph with the corresponding part of the first still image, and thus stitching the one corresponding part of the first still image into the first composite photograph. This yields a processed first composite photograph that may be presented to a user standing at a waypoint in the virtual environment. A user that is presented this processed first composite photograph may be able to interact with the one corresponding part to indicate that he wants to move to a second waypoint. Advantageously the user can only interact with the corresponding part when the user has a certain orientation, hence the composite movie can always start presenting an appropriate (spatial) part of the composite movie, namely a (spatial) part that comprises the corresponding (spatial) part described above. This enables that a user must have a certain orientation in the virtual environment if he wants to proceed to another waypoint. Because this orientation is predetermined, the composite movie may always start with a corresponding predetermined orientation, which prevents a sudden re-orientation when transitioning from the processed first composite photograph to the composite movie.

The embodiment further optionally comprises step S8, which comprises storing the virtual representation, which is the result of linking the first composite photograph, the composite movie and the second composite photograph.

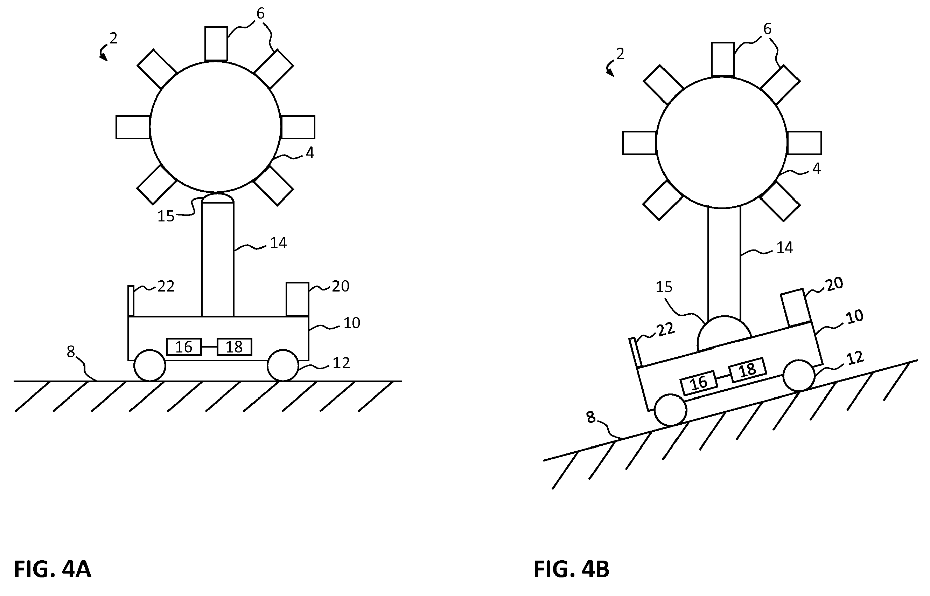

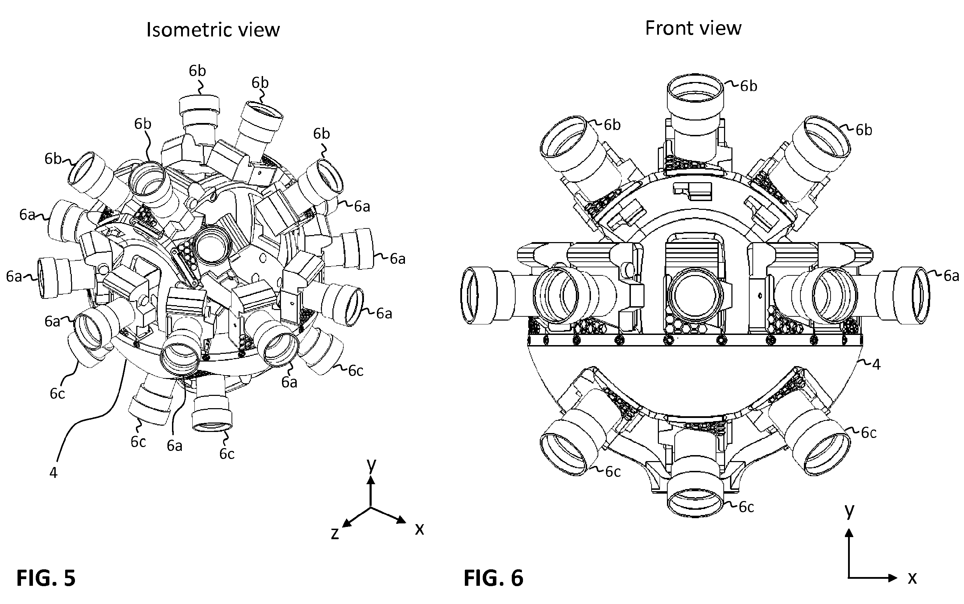

FIG. 4A shows an embodiment of the moveable system 2 for obtaining a virtual representation. The system 2 comprises structure 4 that is configured to hold a plurality of cameras 6. Structure 4 will be explained in more detail with reference to FIG. 5. Structure 4 is configured to hold 22 cameras. As shown, system 2 stands on surface 8 and is able to move over the surface 8 by means of a mobile carrier 10 comprising wheels 12. The wheels 12 are easily replaceable so that the wheels 12 can be easily adapted to different surfaces 8. Alternatively, the carrier 10 comprises caterpillar tracks, or other means for moving carrier 10. The structure 4 is supported by a monopod 14 that is mounted on carrier 10. The height of monopod is adjustable in a range between 1 meter and 1.60 meters by electromechanical means. If desirable the monopod 14 may be replaced by a longer monopod, e.g. a monopod of 6 meters height. In addition, the monopod 14 comprises coupling means 15 that are configured to couple the monopod 14 to structure 4. The coupling means 15 enable the structure 4 to be rotated with respect to the monopod 14 around any direction, e.g. around each of the Euclidean axes. This enables keeping the structure 4 at a fixed orientation with respect to the surface 8 while rotating carrier 10 with respect to the surface 8. The coupling means also enable the structure 4 to be tilted, e.g. over a 20 degree angle, with respect to the carrier 10. Being able to tilt the structure 4 may be beneficial because the structure 4 may be kept at a fixed horizontal orientation even if the system 2 moves over a surface 8 with a varying slope.

The carrier 10 comprises control means 16, a power source 18 and an antenna 22. The control means 16 are configured to control system 2. Control means 16 are for example configured to steer the wheels and control a speed of the system 2. Furthermore, the control means 16 are configured to control the height of the monopod 14 and the orientation of the structure 4. In this example the control means 16 control system 2 on the basis of signals that are received via antenna 22. Antenna 22 may be a WiFi antenna. The antenna, in combination with the control means 16, enable that the entire system 2 is remotely controllable.

Conveniently, system 2 comprises a camera 20 that is configured to stream live images to a remote control device. The antenna 22 may be used for the streaming these images. The live images enable a person that is remotely controlling the system 2, e.g. maneuvering the system 2, to see where the system is heading and enables the person to stay out of sight of the cameras 6.

Alternatively, the control means 16 may control the movements of the system 2 on the basis of preprogrammed information, e.g. the path along which the system 2 moves and the locations where and when to take photographs, and where and when to take video-recordings, may be preprogrammed into system 2.

System 2 is configured to move at walking speed.

Power source 18 may comprise six rechargeable Li-ion batteries and is used for powering carrier 10 to maneuver the system 2 over surface 8. Additionally power source 18 delivers the required power for adjusting the height of the monopod 14 and for adjusting the orientation of structure 4.

It should be appreciated that in another embodiment (not shown) the system may not comprise a mobile carrier 10, but may still be moveable with respect to surface 8. An example of such a configuration is one wherein the system 2 hangs from a moving structure.

FIG 4B shows another example, wherein the coupling means 15 are configured to couple the monopod 14 with carrier 10. The couplings means may comprise a gimbal, that beneficially enables that the monopod 14 is kept vertical, even if the system moves over a surface 8 that has a varying slope. Keeping the monopod 14 substantially vertical may be beneficial, because it may prevent the system 2 from tipping over when moving up or down a sloped surface 8.

FIG. 5 shows an isometric three-dimensional view of the structure 4. The structure 4 is configured to hold 22 cameras. 10 cameras 6a are directed in a horizontal plane parallel to plane x-z as indicated, further 6 cameras 6b are directed upwards from the horizontal plane, and 6 cameras 6c are directed downwards from the horizontal plane. The fields of view of the 22 cameras cover substantially all directions from the structure 4. It should be appreciated that cameras 6a eventually enable a user to look 360 degrees around in the horizontal plane in the virtual environment, similarly cameras 6b enable a user to look up in the virtual environment, and cameras 6c enable a user to look down in the virtual environment. Structure 4 thus enables obtaining a virtual representation, wherein a user may be able to look into every direction. Each camera comprises in-camera stabilization technology and lens stabilization technology.

The structure 4 defines a substantially spherical space and each camera 6a, 6b, 6c is directed away from the sphere, in a radial direction from the midpoint of the sphere. The cameras are evenly distributed on the structure.

Each camera 6 comprises a full frame 50 Megapixel image sensor and is configured to take photographs and to take video recordings. More precisely, the image sensor is a 35mm full frame (35.9 x 24.0mm), Exmor R CMOS sensor, having an effective number of pixels of approximately 42.4 megapixels, and having a total number of pixels of approximately 43.9 megapixels. The cameras may be configured to photograph as per below:

| | |
|---|---|
| **[3:2 aspect ratio]** | 35mm full frame L: 7952 x 5304 (42M), M: 5168 x 3448 (18M), S: 3984 x 2656 (11M) |
| | APS-C L: 5168 x 3448 (18M), M: 3984 x 2656 (11M), S: 2592 x 1728 (4.5M) |
| **[16:9 aspect ratio]** | 35mm full frame L: 7952 x 4472 (36M), M: 5168 x 2912 (15M), S: 3984 x 2240 (8.9M) |
| | APS-C L: 5168 x 2912 (15M), M: 3984 x 2240 (8.9M), S: 2592 x 1456 (3.8M) |
| **[Sweep Panorama]** | Wide: Horizontal 12,416 x 1,856 (23M), vertical 5,536 x 2,160 (12M) |
| | Standard: Horizontal 8,192 x 1,856 (15M), vertical 3,872 x 2,160 (8.4M) |

The cameras may also be configured to video-record as per below:

| | |
|---|---|
| **[NTSC]** | XAVC S 4K: 3840 x 2160 (30p/100Mbps, 30p/60Mbps, 24p/100Mbps, 24p/60Mbps) |
| | XAVC S HD: 1920 x 1080 (60p/50Mbps, 30p/50Mbps, 24p/50Mbps), 1280 x 720 (120p/50Mbps) |
| | AVCHD: 1920 x 1080 (60p/28Mbps/PS, 60i/24Mbps/FX, 60i/17Mbps/FH, 24p/24Mbps/FX, 24p/17Mbps/FH) |
| | MP4: 1920 x 1080 (60p/28Mbps, 30p/16Mbps), 1280 x 720 (30p/6Mbps) |
| **[PAL]** | XAVC S 4K: 3840 x 2160 (25p/100Mbps, 25p/60Mbps) |
| | XAVC S HD: 1920 x 1080 (50p/50Mbps, 25p/50Mbps), 1280 x 720 (100p/50Mbps) |
| | AVCHD: 1920 x 1080 (50p/28Mbps/PS, 50i/24Mbps/FX, 50i/17Mbps/FH, 25p/24Mbps/FX, 25p/17Mbps/FH) |
| | MP4: 1920 x 1080 (50p/28Mbps, 25p/16Mbps), 1280 x 720 (25p/6Mbps) |

Each camera 6 is configured to video-record in 4K resolution at 24 frames per second. Each camera is also configured to video-record at higher speeds, up to 200 frames per second. Furthermore, each camera is configured to photograph at 4K resolution.

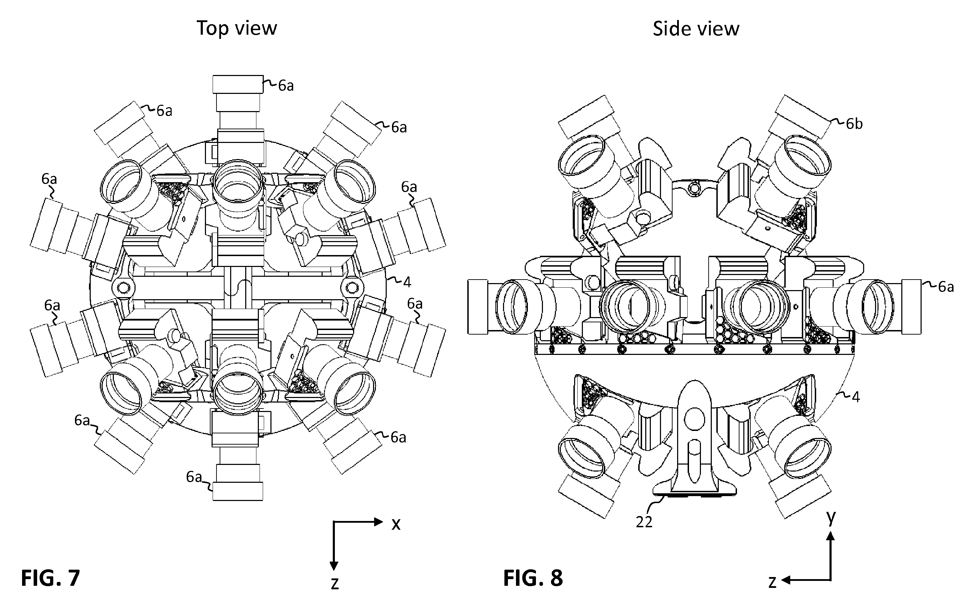

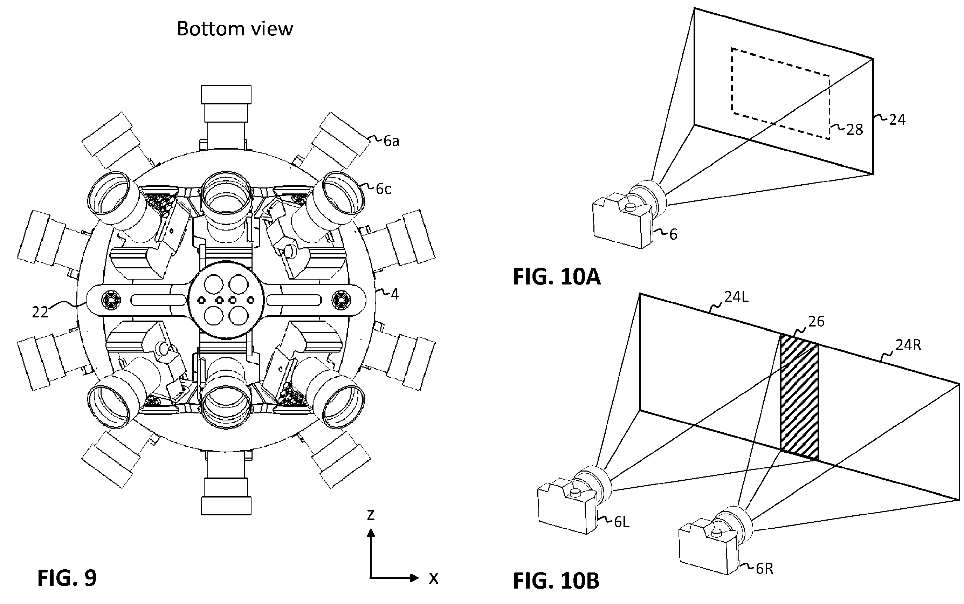

FIGS. 6-9 show the structure 4 from different angles. FIG. 8 shows a side view and FIG. 9 shows a bottom view. In these figures coupling part 22 is shown with which the structure 4 may be coupled to monopod 14, in particular to the above-described coupling means. Coupling part 22 is easily mountable on the monopod 14, so that the system 2 can be easily assembled at the first location.

FIG. 10A shows a camera 6 comprising a full frame image sensor with associated field of view 24. Field of view 24 shows the (spatial) part of the surroundings that is captured by the full frame image sensor. Field of view 24 thus may be considered as the part of the non-virtual environment that is virtually represented by a photograph taken by camera 6. Also indicated is the field of view 28 of a camera that does not comprise a full frame image sensor, but that is in every other aspect identical to camera 6. Using a full frame image sensor instead of another sensor, such as a crop sensor, enlarges the field of view of a camera, which is beneficial for the method and system as explained above.

FIG. 10B illustrates the concept of overlapping fields of view of two cameras. FIG. 9B shows two cameras 6 that are positioned next to each other. The camera on the left, camera 6L, has a field of view 24L, the camera on the right 6R has field of view 24R. The fields of view 24L and 24R have an overlapping area 26. This means that the image sensors in each respective camera captures a same part of the surroundings. Such an overlapping region 26 is convenient for stitching photographs and video-recordings to respectively create a composite photograph and a composite movie.

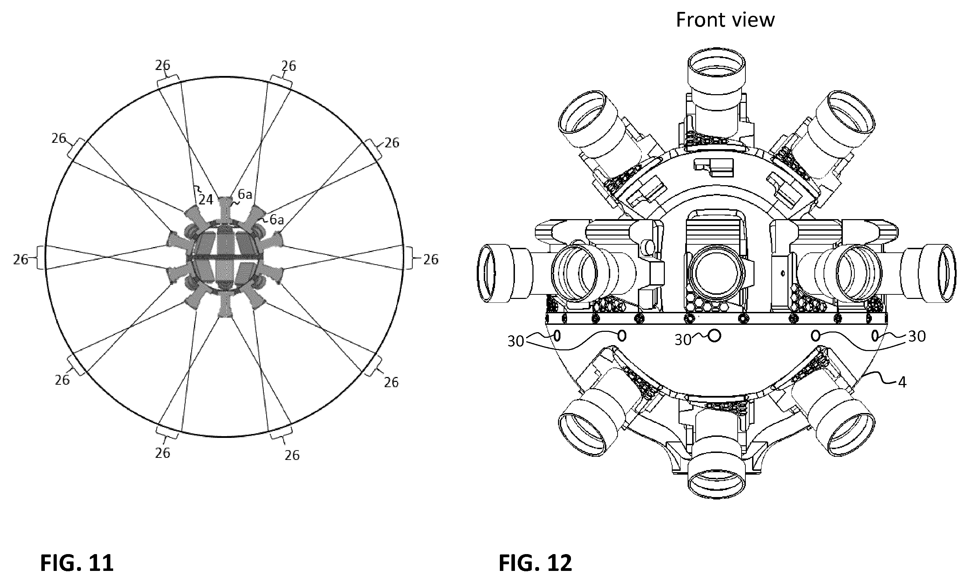

FIG. 11 illustrates the overlapping fields of view 26 of the cameras 6a, which are directed horizontally. Cameras 6a are of positioned next to each other as in FIG. 10B, however, the principle of overlapping fields of view is the same. The fields of view 24 of the cameras 6a cover 360 degrees around of the structure 4. Furthermore, each field of view 24 overlaps with at least two other fields of view. It should be understood that in the structure 4, as shown in FIG. 4, the top parts of the fields of view of cameras 6a overlap with the fields of view of cameras 6b. Similarly, the bottom parts of the fields of view of cameras 6a in structure 4 overlap with the fields of view of cameras 6c. Even further, the fields of view of the cameras 6b overlap each other and the fields of view of the cameras 6c overlap each other. Hence an entire inside of a sphere around the structure may be covered by fields of view, and hence substantially the entire surroundings may be captured in a plurality of photographs and/or a plurality of video-recordings that may be easily stitched together.

FIG. 12 shows an embodiment of the system that comprises an illumination system comprising one or more lamps 30 that is configured to illuminate the non-virtual environment. In this example, the structure 4 comprises ten lamps 30. The lamps 30 are 5 cm by 5 cm LEDs and can radiate light at an adjustable lux, up to 22,000 lux, and at an adjustable color temperature, between 2500 and 6500 K. The lamps 30 are remotely controllable. In this embodiment each lamp 30 is separately controllable. It should be understood that the control means 16 are configured to control the lamps. The control means 16 may control the lamps 30 on the basis of signals received via antenna 22. Also, the control means may be configured to control the lamps 30 on the basis of preprogrammed information. In an example, the system 2 is programmed to move along a path from the first location to the second location, wherein the path comprises a passage through a dark corridor. The control means may be preprogrammed to control the lamps 30 to increase the light intensity of the radiated light while the system 2 passes through the dark corridor.

The lamps 30 are directed horizontally. Additional lamps may be applied to the structure 4 that are directed upwards or downwards.

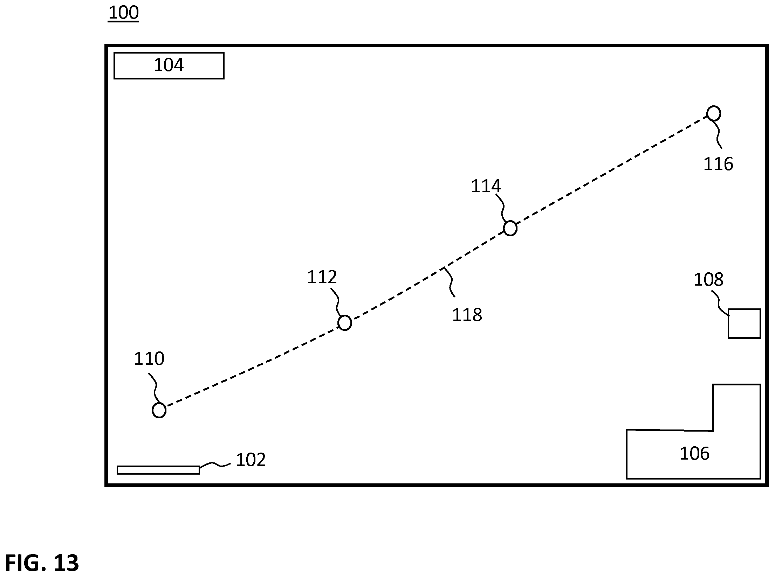

FIG. 13 shows a floor plan 100 of a non-virtual environment. In this example the non-virtual environment is a living room. Of course, the non-virtual environment may comprise any non-virtual area or region, such as a store, city, movie studio, building, house, office, etcetera. In the living room a painting 102 hangs on the south wall, a cabinet 104 stands in one corner and in another corner a couch 106 is present. Next to the couch 104 stands a heater 108. Four locations in the living room are marked, location 110, location 112, location 114 and location 116.

The living room may be recorded using the camera system to obtain a virtual representation of the living room according to an embodiment of the disclosed method. Accordingly, a moveable device that comprises a plurality of cameras, e.g. an embodiment of the above described system, is positioned at location 110. Here, a first plurality of photographs are taken of the living room with the plurality of cameras. In this example the combined fields of view of the plurality of cameras cover 360 degrees around and each camera takes a photograph of the living room. It may be that the photographs are taken simultaneously, but this is not required per se. As explained, this first plurality of photographs may be used to generate a first composite photograph of the living room.

After the first plurality of photographs has been taken the device is moved along path 118 from location 110 to location 116 passing location 112 and location 114. While the device moves from location 110 to location 116, the living room is continuously video-recorded with the plurality of cameras. Since the set-up of the cameras is not changed, again the combined fields of view of the cameras still cover 360 degrees around. Preferably the movement from location 110 to location 116 is initiated after the device has started video-recording with the plurality of cameras to ensure that the first composite photograph can be smoothly integrated with the composite movie.

The moveable device is preferably remotely controlled to move from location 110 to location 116. To this end the live view camera may be used so that someone who is controlling the system can properly maneuver the system without being in the way of the cameras. Preferably the system moves at walking speed.

Once the system has arrived at location 116, the system stops video-recording the living room with the plurality of cameras. Preferably the system continues for some time video-recording the living room after it has reached location 116 in order to ensure good integration of the composite movie with a second composite photograph.

After the system has ceased video-recording and is standing on location 116, it takes a second plurality of photographs of the living room. Again 360 degrees are covered. The second plurality of photographs may be used to create a second composite photograph.

After the living room has been photographed and video-recorded, the images are further processed. The first plurality of photographs are stitched together to form a first composite photograph. Not that this composite photograph is a substantially 360 degrees around panoramic photograph of the living room as viewed from location 110, i.e. the viewpoint of the first composite photograph is location 110. Similarly, the second plurality of photographs are stitched together to form a second composite photograph. The second composite photograph is a 360 degrees around panoramic photograph of the living room as viewed from location 116. The viewpoint of the second composite photograph is thus location 116. Also, the plurality of video-recordings are video-stitched together to form a composite movie. The movie starts with the viewpoint being at location 110. When the movie ends the viewpoint has arrived at location 116. At a first moment, t1, during the composite movie, the viewpoint passes location 112 and at a second moment, t2, the viewpoint passes location 114. The composite movie, just as the composite photographs, comprise video-recordings of 360 degrees around.

The thus created composite photographs and composite movie are integrated in order to obtain the virtual representation. Hereto a first still image of the composite movie, e.g. the still image that was first recorded while video-recording, is stitched to the first composite photograph. Also a second still image, e.g. the still image that was last recorded while video-recording, is stitched to the second composite photograph. This results in an improved virtual environment as will be explained in more detail below.

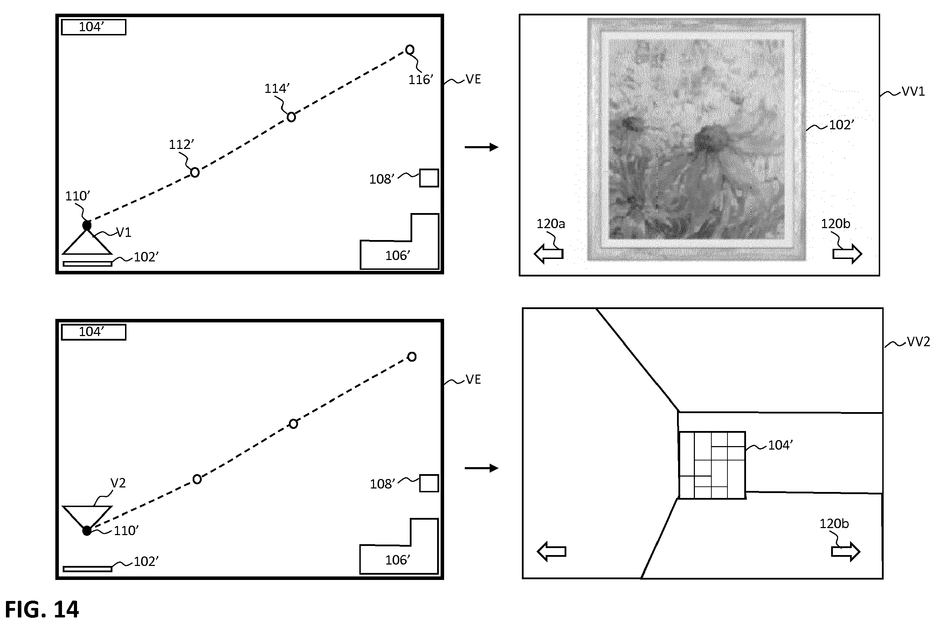

FIGS. 14-17 illustrate a possible result of the above-described method. In this example, the virtual representation of the living room can be considered as a virtual environment representing the living room, wherein a user may be able to virtually walk around. On the left hand side of FIGS. 14-17, top views of this virtual environment VE are shown and on the right hand side virtual views VV1-VV7 are shown.

It should be appreciated that the top views of the virtual environment VE are not necessarily presented to a user that is exploring the virtual environment and may thus not be part of the obtained virtual representation of the living room, whereas the virtual views VV1-VV7 are part of the obtained virtual representation. The top views of the virtual environment are included in the figures to ease interpretation of virtual views VV1 - VV7.

As shown in the top views of FIG. 14, the virtual environment VE comprises virtual representations, indicated by an apostrophe, of painting 102', of cabinet 104', of the couch 106', and of the heater 108'. Furthermore, the virtual locations 110', 112', 114' and 116' respectively correspond to locations in the living room 110, 112, 114 and 116. In this example, the virtual environment comprises two waypoints, namely virtual location 110' and virtual location 116'. Further shown is the viewing angle V1 (and V2) of a virtual person standing at location 110' in the virtual environment. It should be understood that that the viewing angle V1 of a virtual person standing in the virtual environment VE yields the virtual view VV1, viewing angle V2 yields virtual view VV2.

While the user is standing in the virtual environment at location 110', the first composite photograph is presented to the user. The user is able to control the viewing angle while at location 110', e.g. by using a navigation device such as a mouse or a pair of virtual reality glasses, and can thus control which part of the first composite photograph is presented to him. In other words, the user is able to look around in the virtual environment in all (horizontal) directions while standing at location 110'. When the user chooses viewing angle V1 as depicted in the top left portion of FIG. 14, the user sees virtual view VV1. In this example, the user sees the virtual representation of the painting 102'. Since the composite photograph is taken at a high resolution, the user is able to explore every detail of the virtual representation of the painting 102'. A user may be able to zoom in and out and spend as much time as he wants to look at the painting. It may also be that the user is able to interact with the virtual representation of the painting 102'. He may for example click with a cursor on the painting and as a result information about the painting may be presented to him. In another example, a click on the painting 102' may activate a hyperlink that leads the user to a website where he can purchase painting 102.

As noted, a user can control the viewing angle. To this end, the virtual view VV1, and all other virtual views described below, comprise viewing angle controls 120. When the user wishes to adjust the viewing angle to the left he may click on the left arrow 120a, when a user wishes to adjust the viewing angle to the right he may click on the right arrow 120b.

When a user sees virtual view VV1 he may wish to adjust the viewing angle to the right by clicking on arrow 120b. A possible result then is virtual view VV2. As shown, now the viewing angle V2 is directed at the corner where the virtual representation of the cabinet 104' can be seen.

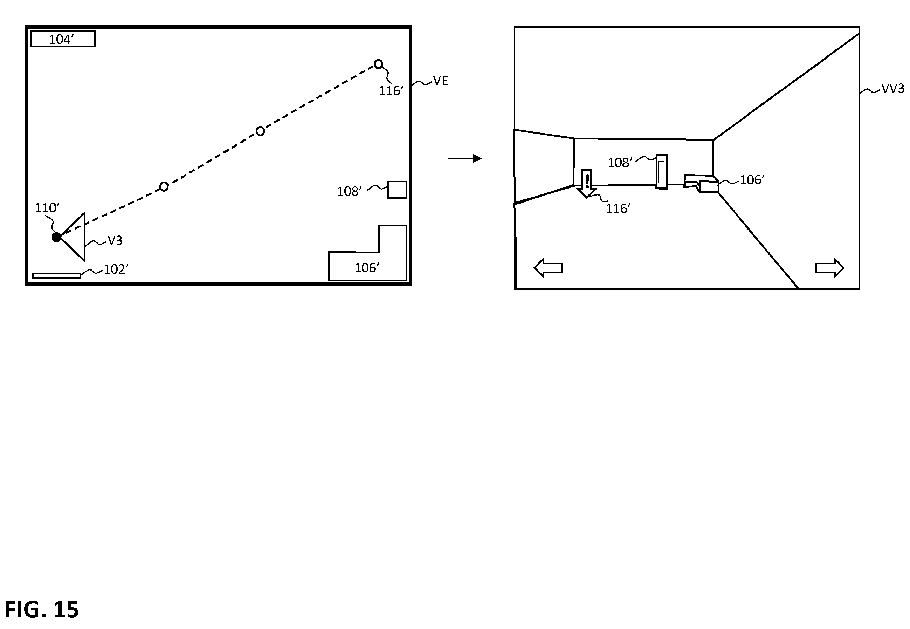

When a user again clicks on the right arrow 120b in the virtual view VV2, the viewing angle may be adjusted to viewing angle V3 and virtual view VV3 depicted in FIG. 15 may be presented to the user. Virtual view VV3 comprises virtual representations of the couch 106' and of the heater 108'. Note that the heater 108' is switched off. Also indicated in the virtual view VV3 is the second waypoint at location 116'. The arrow with the exclamation mark indicates that a user is able to proceed in the virtual environment to this next waypoint at location 116'. It should be noted that virtual views VV1, VV2 and VV3 are all parts of the first composite photograph.

When a user clicks on the arrow at location 116', the composite movie is presented to him. The composite movie begins with an image that is (substantially) identical to virtual view VV3. In other words, at the start of the composite movie, a spatial part of the composite movie is presented to the user that is linked to virtual view VV3 of the composite photograph. Note that linking part of the composite photograph VV3 to the composite movie (i.e. to a still image) was possible since the recordings for the composite movie were initiated when the device was at first location 110, where also the first plurality of photographs were taken, yielding substantially identical images in respectively a still image of the composite movie and the composite photograph. Therefore a smooth transition from the first composite photograph to the composite movie is achieved. After this transition the viewpoint of the composite movie begins moving from location 110' to location 116' in the virtual environment.

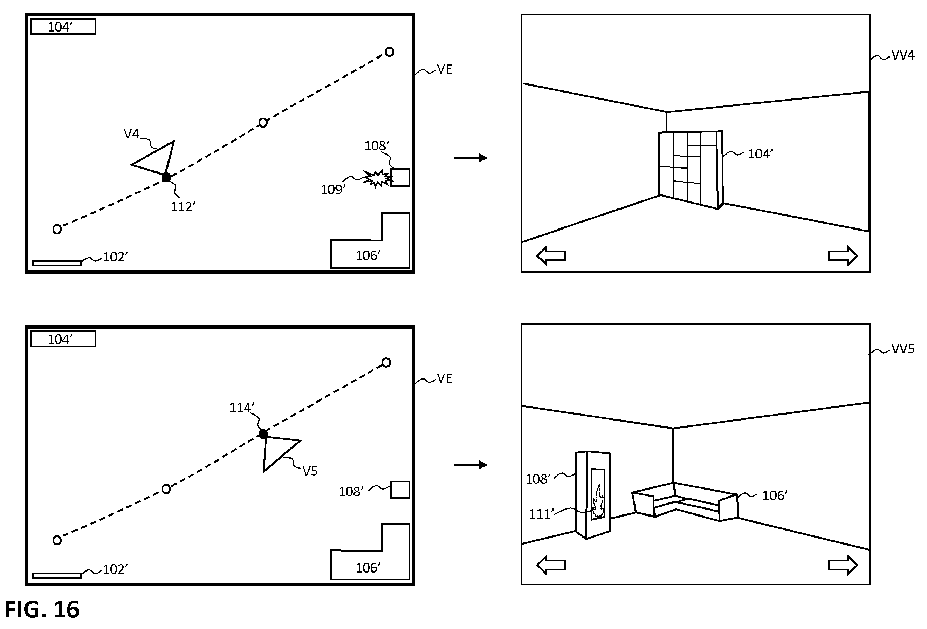

FIG. 16 shows two still images, VV4 and VV5, from the composite movie. Still image VV4 is taken at time t1 during the composite movie. At this point in the movie the viewpoint passes location 112' as also indicated in the top view. The user sees still image VV4 and sees the virtual representation of the cabinet 104' from a different perspective than was shown in VV2. It should be appreciated that the user is able to control the viewing angle and control which spatial part of the movie is presented to him. He could have also chosen to, at time t1, look into the direction of the other corner where the virtual representation of the couch 106' can be seen. In this example, however the user has chosen viewing angle V4. It should be appreciated that, since the composite movie is dynamic, the virtual representation 104' of the cabinet may change during the composite movie (not shown). For example one of the doors of the cabinet 104' may open.

At time t1, suddenly the heater 108' switches on, which is depicted in the top view with event 109'. Because the user is looking in the virtual environment in the opposite direction, he does not see the heater 108' switching on. However, he may hear a sound associated with the heater 108' switching on. If for example, 360 degrees sound recordings have been made, a user may hear that something happens behind him in the virtual environment. In response a user may adjust the viewing angle, again by clicking on one of the viewing angle controls 120. At a time t2, the user may have adjusted the viewing angle to viewing angle V5. Note that at time t2, the viewpoint of the composite movies passes location 114'. Viewing angle V5 corresponds to still image VV5. The user sees virtual representations of the couch 106' and of the heater 108'. Furthermore, the user now sees that a fire 111' has been initiated in the heater 108'. It should be appreciated that the user sees a moving virtual representation of the fire 111', since it has been video-recorded and since the user sees the fire during the composite movie.

When the viewpoint of the composite movie has arrived at the second waypoint at location 116', the composite movie ends and the second composite photograph is presented to a user. It should be noted that since the viewpoint at the end of the composite movie is the same as the viewpoint of the second composite photograph, a smooth transition may be provided for the user from the composite movie to the second composite photograph.

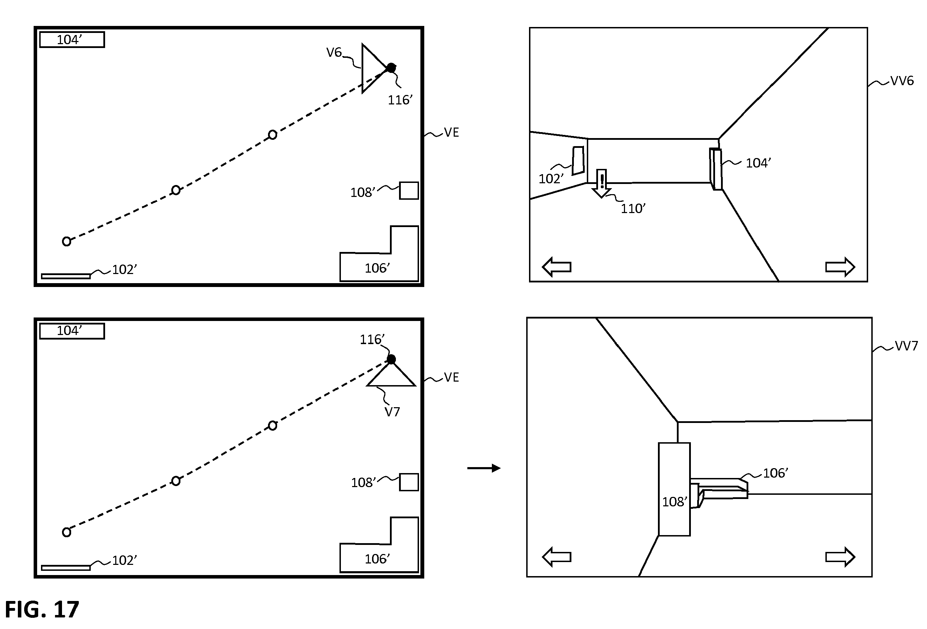

FIG. 17 shows two virtual views, VV6 and VV7, that are part of the second composite photograph. In the virtual environment, the user stands at the second waypoint 116' and is able to take as much time as he wants to look around and explore the virtual environment from this viewpoint. Virtual view VV6 also shows the first waypoint 110' as indicated by the arrow with the exclamation mark. If the user decides to return to the first waypoint at location 110', he may click on the arrow with the exclamation mark. It should be appreciated that then the same composite movie may be presented to the user, only this time played backwards. Alternatively, it may be that a second composite movie has been recorded wherein the viewpoint moves from location 116 to location 110 and that this second composite movie is presented when the user indicates that he wants to move from waypoint 116' to waypoint 110'.

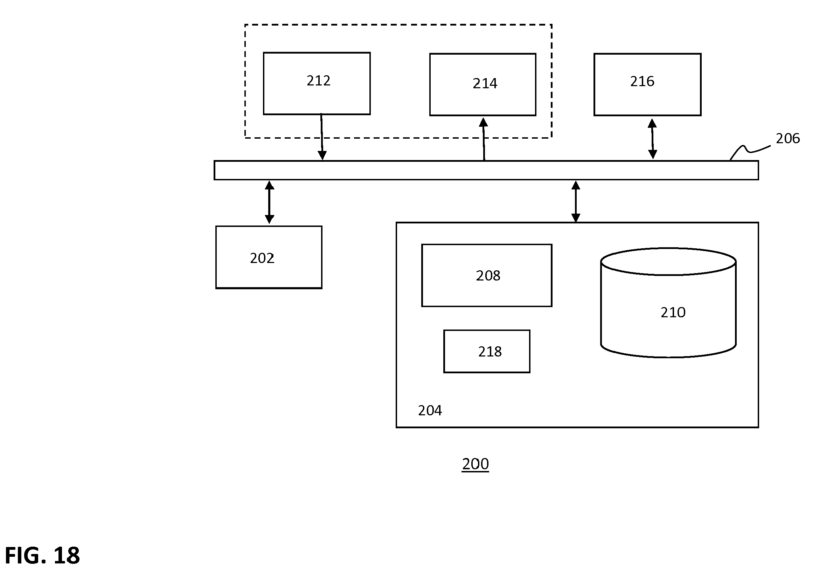

Fig. 18 depicts a block diagram illustrating an exemplary data processing system that may be used in the described moveable system or in the described method.

As shown in Fig. 18, the data processing system 200 may include at least one processor 202 coupled to memory elements 204 through a system bus 206. As such, the data processing system may store program code within memory elements 204. Further, the processor 202 may execute the program code accessed from the memory elements 204 via a system bus 206. In one aspect, the data processing system may be implemented as a computer that is suitable for storing and/or executing program code. It should be appreciated, however, that the data processing system 200 may be implemented in the form of any system including a processor and a memory that is capable of performing the functions described within this specification.

The memory elements 204 may include one or more physical memory devices such as, for example, local memory 208 and one or more bulk storage devices 210. The local memory may refer to random access memory or other non-persistent memory device(s) generally used during actual execution of the program code. A bulk storage device may be implemented as a hard drive or other persistent data storage device. The processing system 200 may also include one or more cache memories (not shown) that provide temporary storage of at least some program code in order to reduce the number of times program code must be retrieved from the bulk storage device 210 during execution.

Input/output (I/O) devices depicted as an input device 212 and an output device 214 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 18 with a dashed line surrounding the input device 212 and the output device 214). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 216 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 200, and a data transmitter for transmitting data from the data processing system 200 to said systems, devices and/or networks. Modems, cable modems, and Ethernet cards are examples of different types of network adapter that may be used with the data processing system 200.

As pictured in Fig. 18, the memory elements 204 may store an application 218. In various embodiments, the application 218 may be stored in the local memory 208, the one or more bulk storage devices 210, or apart from the local memory and the bulk storage devices. It should be appreciated that the data processing system 200 may further execute an operating system (not shown in Fig. 18) that can facilitate execution of the application 218. The application 218, being implemented in the form of executable program code, can be executed by the data processing system 200, e.g., by the processor 202. Responsive to executing the application, the data processing system 200 may be configured to perform one or more operations or method steps described herein, e.g. stitching the first plurality of photographs together forming a first composite photograph of the non-virtual environment.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 202 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A moveable system for recording a non-virtual environment for obtaining a virtual representation of the non-virtual environment comprising:
- a structure that is configured to hold a plurality of cameras;
- the plurality of cameras attached to the structure, such that at least two cameras out of the plurality of cameras have overlapping fields of view, wherein
- each camera of the plurality of cameras is configured to take photographs of the non-virtual environment and to take video-recordings of the non-virtual environment.

2. The system according to claim 1, wherein each camera of the plurality of cameras is configured to take photographs at a first resolution and to take video-recordings at a second resolution, the first resolution being higher than the second resolution.

3. The system according to claim 1 or 2, wherein each camera of the plurality of cameras comprises a full frame image sensor.

4. The system according to one or more of the preceding claims 1-3, wherein the structure comprises an illumination system that is configured to illuminate the non-virtual environment.

5. The system according to claim 4 further comprising control means that are configured to control the illumination system to adjust at least one of a hue and a light intensity of light radiated by the illumination system.

6. The system according to claim 5, further comprising:
at least one light detector for measuring at least one of a hue and a light intensity of ambient light in the non-virtual environment, wherein
the control means are configured to control the illumination system on the basis of the measured hue and/or light intensity of the ambient light.

7. The system according to one or more of the claims 4-6, wherein the illumination system comprises at least a first lamp and a second lamp, and wherein the system further comprises control means configured to separately control the first and the second lamp.

8. The system according to one or more of the preceding claims, wherein the system further comprises control means configured to control at least one of a height and an orientation of the structure.

9. The system according to one or more of the preceding claims 5-8, wherein the control means are remotely controllable.

10. A method for recording a non-virtual environment for obtaining a virtual representation of the non-virtual environment using a moveable device comprising a plurality of cameras, the method comprising the steps in the non-virtual environment of:
- taking a first plurality of photographs of the non-virtual environment using the plurality of cameras at a first location;
- moving the moveable device from the first location to a second location over a surface and continuously taking a plurality of video-recordings with the plurality of cameras of the non-virtual environment while moving the device from the first location to the second location;
- taking a second plurality of photographs of the non-virtual environment using the plurality of cameras at the second location.

11. The method according to claim 10, further comprising taking the first and second plurality of photographs at a first resolution and taking the plurality of video-recordings at a second resolution, the first resolution being higher than the second resolution.

12. The method according to claim 10 or 11, further comprising:
- stitching the first plurality of photographs together forming a first composite photograph of the non-virtual environment;
- video stitching the plurality of video-recordings together forming a composite movie of the non-virtual environment;
- stitching the second plurality of photographs together forming a second composite photograph of the non-virtual environment;
- linking the first composite photograph to the composite movie and linking the second composite photograph to the composite movie for obtaining the virtual representation.

13. The method according to claim 12, wherein the composite movie comprises a first still image and a second still image, the method further comprising:
- linking the first composite photograph to the first still image;
- linking the second composite photograph to the second still image.

14. The method according to one or more of the preceding claims, wherein the system according to one or more of the preceding claims 1-9 is applied.

15. A computer program or suite of computer programs comprising at least one software code portion or a computer program product storing at least one software code portion, the software code portion, when run on a computer system, being configured for executing the method according to one or more of the claims 10-14.
